# EUROPÄISCHE PATENTSCHRIFT

(11) **EP 2 566 922 B1**
(45) Veröffentlichungstag und Bekanntmachung des Hinweises auf die Patenterteilung: **18.03.2015**
(21) Anmeldenummer: 11718344.2
(22) Anmeldetag: 02.05.2011
(51) Int. Cl.: C08J 3/24, C08G 59/04, C09D 163/00, C09D 163/04, C08L 63/04, C08L 63/00, C08G 59/38, C09J 163/00, C09J 163/04

(54) **1K-EPOXIDHARZZUSAMMENSETZUNG MIT VERRINGERTER TOXIZITÄT**
1C EPOXY RESIN COMPOSITION WITH REDUCED TOXICITY
COMPOSITION DE RÉSINE ÉPOXY 1C AYANT UNE TOXICITÉ RÉDUITE

(30) Priorität: 05.05.2010 DE 102010028586
(43) Veröffentlichungstag der Anmeldung: 13.03.2013
(73) Patentinhaber: Henkel AG & Co. KGaA, 40589 Düsseldorf (DE)
(72) Erfinder: WALTER, Pablo, 40221 Düsseldorf (DE); BENOMAR, Mustapha, 47137 Duisburg (DE); KREILING, Stefan, 69214 Eppelheim (DE); TROLL, Angelika, 40593 Düsseldorf (DE); SCHÖNFELD, Rainer, 40627 Düsseldorf (DE)
(86) Internationale Anmeldenummer: PCT/EP2011/056906
(87) Internationale Veröffentlichungsnummer: WO 2011/138254

(56) Entgegenhaltungen:
- WO-A1-99/29757
- WO-A1-2007/060091
- DE-A1- 2 347 932

## Beschreibung

Die vorliegende Erfindung betrifft einen einkomponentigen Klebstoff auf Basis eines speziellen Epoxidharzsystems. Das erfindungsgemäße Epoxidharzsystem ermöglicht es, ohne den Einsatz von Komponenten, die als toxisch, reizend oder sensibilisierend eingestuft sind und die nach europäischem Recht eine entsprechende Kennzeichnung erforderlich machen würden, Klebestoffe zur Verfügung zu stellen, die hinsichtlich der meisten Anwendungseigenschaften den herkömmlichen Klebstoffsystemen ebenbürtig sind.

Epoxid-basierte Harzsysteme werden seit langem erfolgreich als Klebstoffe oder Reparaturmassen für Konsumenten, Heimwerker und Handwerker sowie in der
Luftfahrt-, Automobil- oder Elektroindustrie als Klebstoffe, Dichtstoffe oder zur Beschichtung von Oberflächen benutzt oder als Harzsysteme mit einer Reihe unterschiedlicher Materialien für die Herstellung von Verbundwerkstoffen verwendet. Härtbare Formulierungen, die Epoxid/Härter-Mischungen enthalten, eignen sich insbesondere als Strukturklebstoffe.

Weiterhin eignen sich Epoxid-basierte Harzsystheme als so genannte Strukturschäume zum Füllen und Verstärken von Hohlbauteilen, insbesondere im Automobilbau. Leichtbauteile für eine konstant maßhaltige Serienfertigung mit hoher Steifigkeit und Strukturfestigkeit werden für viele Anwendungsfelder benötigt. Insbesondere im Fahrzeugbau besteht wegen der gewünschten Gewichtsersparnis ein hoher Bedarf für Leichtbauteile aus dünnwandigen Strukturen, die trotzdem ausreichende Steifigkeit und Strukturfestigkeit besitzen. Ein Weg zur Erzielung hoher Steifigkeit und Strukturfestigkeit bei möglichst niedrigem Gewicht des Bauteils benutzt Hohlteile, die aus verhältnismäßig dünnem Blech oder Kunststoffplatten gefertigt sind. Dünnwandige Bleche neigen jedoch zur leichten Deformation. Daher ist es bereits seit einiger Zeit bekannt, bei Hohlkörperstrukturen diesen Hohlraum mit einem Strukturschaum auszuschäumen, wodurch einerseits die Deformation oder Verformung verhindert oder minimiert wird und andererseits Festigkeit und Steifigkeit dieser Teile erhöht werden.

Üblicherweise sind derartige geschäumte Verstärkungs- und Versteifungsmittel entweder Metallschäume oder sie enthalten ein thermisch härtbares Harz oder Bindemittel wie beispielsweise Epoxidharze. Diese Zusammensetzungen enthalten in der Regel ein Treibmittel, Füllstoffe und verstärkende Füllstoffe wie beispielsweise Mikrohohlkugeln aus Glas. Vorzugsweise haben solche Schäume im aufgeschäumten und ausgehärteten Zustand eine Dichte von 0,3 bis 0,7 g/cm³. Diese Schäume sollen nach der Aushärtung Temperaturen von mehr als 130°C, vorzugsweise mehr als 150°C zumindest kurzfristig schadlos überstehen. Derartige schäumbare, thermisch härtbare Zusammensetzungen enthalten in der Regel weitere Bestandteile wie Härtungsagenzien, Prozesshilfsmittel, Stabilisatoren, Farbstoffe oder Pigmente, gegebenenfalls UV-Absorber sowie haftungsverstärkende Bestandteile.

Eine wichtige Eigenschaft des ungehärteten Harzsystems ist dessen Viskosität, die für die Handhabung und Verarbeitbarkeit bedeutend ist. Wichtige Materialeigenschaften der gehärteten Formulierungen sind hierbei unter anderem Klebekraft (häufig als Zugscherfestigkeit bestimmt) und E-Modul.

Reaktive Epoxidharzsysteme des Standes der Technik enthalten häufig Bestandteile, die als wassergefährdend, toxisch, reizend und/oder sensibilisierend eingestuft werden und beispielsweise bei der Verarbeitung zu Kontaktdermatitis führen können. Nach europäischem Recht müssen solche Zubereitungen mit den entsprechenden Gefährdungskennzeichen (z.B.: C, Xn, Xi, N) versehen werden. Aus Gründen des Umweltschutzes, der Sicherheit und der Arbeitshygiene sind reaktive Epoxidharze enthaltende Zubereitungen wünschenswert, die nach europäischem Recht nicht kennzeichnungspflichtig sind und ein reduziertes sensibilisierendes Potential aufweisen, jedoch die technischen Anforderungen hinsichtlich Verarbeitbarkeit und Klebstoffeigenschaften erfüllen.

Es ist bekannt, dass reaktive Epoxidharze mit einer Molmasse von oberhalb 700 g/mol nicht sensibilisierend und nicht kennzeichnungspflichtig sind. Beispiele hierfür sind hochmolekulare Feststoffe auf Basis "DGEBA" (= Diglycidylether von Bisphenol A) und flüssige epoxy-terminierte Polyether mit hohem Epoxid-Äquivalentgewicht. Diese zeigen jedoch teilweise nicht die erforderlichen Viskositätseigenschaften für die Verarbeitung vor dem Aushärten und/oder die erforderlichen Festigkeitseigenschaften nach dem Aushärten. Hochmolekulare feste Epoxy-Novolake haben die für eine hohe Festigkeit erforderliche hohe Epoxy-Funktionalität (und entsprechend ein geringes Epoxy-Äquivalentgewicht), sind aber wegen Ihrer hohen Viskosität bei Raumtemperatur nicht verarbeitbar.

Aufgabe der vorliegenden Erfindung war es daher, eine härtbare einkomponentige Epoxidharzmischung zu entwickeln, die in toxikologischer und dermatologischer Hinsicht vorteilhaft ist und dennoch keine Nachteile bei den Anwendungseigenschaften, insbesondere der Viskosität bei der Verarbeitung und/oder der Festigkeit nach dem Aushärten aufweist.

Es wurde nun überraschenderweise gefunden, dass geeignete Mischungen unterschiedlicher reaktiver Epoxidharze zu der erwünschten Eigenschaftskombination von Kennzeichnungsfreiheit, Verarbeitbarkeit und Klebstoffeigenschaften führen.

Ein erster Gegenstand der vorliegenden Erfindung ist daher eine durch Anwendung von Hitze aushärtende Zusammensetzung,
enthaltend eine Mischung von reaktiven Epoxidharzen, die, bezogen auf die Masse aller Epoxidharze
a) mindestens 10 Gew.-% eines Epoxidgruppen-haltigen Reaktionsprodukts von Epichlorhydrin mit Polypropylenglykol, das ein Epoxid-Äquivalentgewicht von mindestens 250g/eq aufweist, sowie
b) mindestens 10 Gew.-% eines Epoxidgruppen-haltigen Reaktionsprodukts von Epichlorhydrin mit einem Novolakharz, das ein Epoxid-Äquivalentgewicht von mindestens 175g/eq aufweist, enthält,
und mindestens einen latenten Härter.

Erfindungsgemäß wird unter einem "reaktiven Epoxidharz" ein Präpolymer verstanden, das eine mittlere Epoxidfunktionalität größer 1 aufweist. Aufgrund der reaktiven Epoxidgruppen kann das Präpolymer mit weiteren gegenüber Epoxidgruppen reaktiven Molekülen (so genannten "Härtern") umgesetzt und hierdurch "ausgehärtet" oder "gehärtet" werden.

Als erste erfindungswesentliche Komponente a) enthält die erfindungsgemäße Zusammensetzung mindestens 10 Gew.-% eines Epoxidgruppen-haltigen Reaktionsprodukts von Epichlorhydrin mit Polypropylenglykol, das ein Epoxid-Äquivalentgewicht von mindestens 250g/eq aufweist.

In einer bevorzugten Ausführungsform enthält die erfindungsgemäße Zusammensetzung 10 bis 60 Gew.-% der Komponente a). Ganz bevorzugt ist ein Mengenbereich von 25 bis 45 Gew.-%. Die Mengenangaben beziehen sich dabei jeweils auf die Mischung aller reaktiven Epoxidharze ohne die weiteren Formulierungsbestandteile.

Im Rahmen der dieser Erfindung zu Grunde liegenden Arbeiten konnte gezeigt werden, dass Epoxidgruppen-haltige Reaktionsprodukte von Epichlorhydrin mit Polypropylenglykol mit einem Epoxid-Äquivalentgewicht von mindestens 300g/eq besonders vorteilhafte Eigenschaften aufweisen.

Besonders bevorzugte Komponenten a) sind erfindungsgemäß die unter den Handelsbezeichnungen DER 732 (EEW 310-330 g/eq), DER 732P (EEW 310-330 g/eq), von der Firma Dow vertriebenen reaktiven Epoxyharze.

Besonders vorteilhaft ist es erfindungsgemäß, wenn entsprechende Epoxidgruppen-haltige Reaktionsprodukte von Epichlorhydrin mit Polypropylenglykol mit einem Epoxid-Äquivalentgewicht von weniger als 300g/eq maximal zu einem Anteil von 3 Gew.-%, insbesondere von maximal 1 Gew.-%, jeweils bezogen auf die gesamte Zusammensetzung, enthalten sind.

Als zweite erfindungswesentliche Komponente b) enthält die erfindungsgemäße Zusammensetzung mindestens 10 Gew.-% eines Epoxidgruppen-haltigen Reaktionsprodukts von Epichlorhydrin mit einem Novolakharz, das ein Epoxid-Äquivalentgewicht von mindestens 175g/eq aufweist.

In einer bevorzugten Ausführungsform enthält die erfindungsgemäße Zusammensetzung 10 bis 85 Gew.-% der Komponente b). Ganz bevorzugt ist ein Mengenbereich von 30 bis 75Gew.-%. Die Mengenangaben beziehen sich dabei jeweils auf die Mischung aller Epoxidharze ohne die weiteren Formulierungsbestandteile.

Im Rahmen der dieser Erfindung zu Grunde liegenden Arbeiten konnte gezeigt werden, dass Epoxidgruppen-haltige Reaktionsprodukte von Epichlorhydrin mit einem Novolak mit einem Epoxid-Äquivalentgewicht von mindestens 180g/eq, und insbesondere von mindestens 190g/eq, besonders vorteilhafte Eigenschaften aufweisen.

Erfindungsgemäß bevorzugte Novolake sind die Polykondensationsprodukte von Formaldehyd mit Phenol und/oder Cresol.

Darüber hinaus hat es sich als vorteilhaft erwiesen, wenn die Reaktionsprodukte aus Epichlorhydrin und Novolak eine Epoxidfunktionaltität von mindestens 3, insbesondere von mindestens 3,5 aufweist.

Reaktionsprodukte aus Epichlorhydrin und Novolak, die ein Epoxid-Äquivalentgewicht von mindestens 175g/eq und gleichzeitig eine Epoxidfunktionaltität von mindestens 3 aufweisen, konnten hinsichtlich der erfindungsgemäß gestellten Aufgaben besonders überzeugen. Besonders bevorzugt sind Reaktionsprodukte von Epichlorhydrin und Novolak mit einem Epoxid-Äquivalentgewicht von mindestens 180g/eq und einer Epoxidfunktionaltität von mindestens 3, insbesondere Reaktionsprodukte von Epichlorhydrin und Novolak mit einem Epoxid-Äquivalentgewicht von mindestens 190g/eq und einer Eopxidfunktionaltität von mindestens 3,5.

Hierdurch wird am besten die erwünschte Eigenschaftskombination von Verarbeitbarkeit vor dem Aushärten und Klebefestigkeit nach dem Aushärten erreicht.

Besonders bevorzugte Komponenten b) sind erfindungsgemäß die unter den Handelsbezeichnungen DEN 439 (EEW 191-210g/eq; Funktionalität 3,8; Dow), Araldite ECN 1299 (Cresol-Formaldehyd-Novolak; EEW 235 g/eq; Funktionalität 2,5-5,5; Huntsman), Epikote 154 (EEW 176-181 g/eq; Hexion) vertriebenen reaktiven Epoxyharze. DEN 439 ist erfindungsgemäß ganz besonders bevorzugt.

Besonders vorteilhaft ist es erfindungsgemäß, wenn entsprechende Reaktionsprodukte von Epichlorhydrin und Novolak mit einem Epoxid-Äquivalentgewicht von weniger als 175g/eq maximal zu einem Anteil von 3 Gew.-%, insbesondere maximal zu einem Anteil von 1 Gew.-%, jeweils bezogen auf die gesamte Zusammensetzung, enthalten sind.

Um eine optimale Verarbeitbarkeit der erfindungsgemäßen Zusammensetzungen zu gewährleisten, hat es sich erfindungsgemäß als besonders vorteilhaft erwiesen, wenn die Mischung der reaktiven Epoxidharze Viskositäten unterhalb von 3000 Pas aufweisen. Zubereitungen mit einer Viskosität unterhalb von 500Pas sind ganz besonders bevorzugt. Viskositätsmessungen erfolgen erfindungsgemäß bei 25°C mittels eines Rheometers und den folgenden Viskositäts-abhängigen Einstellungen:
- bei einer Viskosität <0,25 Pa*s wurde mittels Kegel/Platte (0,04°/25mm) bei einer Scherrate 0-100 /s gemessen,
- Viskositäten >0,25 Pa*s und <10.000 Pa*s wurden mittels Platte/Platte (25mm/25mm) bei einer Scherrate 0-100/s gemessen, und
- Viskositäten >10.000 Pa*s wurden mittels Platte/Platte (25mm/25mm) und einer Winkelfrequenz von 100 rad/s gemessen.
Unter einer Messung mit einer Scherrate von 0-100 /s wird erfindungsgemäß eine Messung verstanden, bei der die Schergeschwindigkeit innerhalb von 100s von 0/s auf 100/s gesteigert wird. Anschließend wird die Schergeschwindigkeit für 30s konstant gehalten und dann das Ergebnis bestimmt.

Eine weitere wesentliche Eigenschaft der erfindungsgemäßen Mittel ist die so genannte Zugscherfestigkeit im ausgehärteten Zustand. Diese wird mittels des folgenden Versuchsaufbaus bestimmt:
Zwei sandgestrahlte, kaltgewälzte Stahlproben werden mit dem zu prüfenden Klebstoff auf einer Überlappungsfläche von 2,5 cm² benetzt und verklebt; dabei beträgt die Schichtdicke des aufgebrachten Klebstoffs 0,2mm. Nach entsprechender Aushärtung wird die Zugscherfestigkeit des Klebstoffs gemäß DIN EN 1465 mit einer Geschwindigkeit von 15mm/min getestet.
Es hat sich erfindungsgemäß als vorteilhaft erwiesen, wenn die Klebstoffe nach ihrer Aushärtung eine Zugscherfestigkeit oberhalb von 8MPa, insbesondere oberhalb von 10MPa aufweisen. Dabei spielt die Geschwindigkeit des Aushärtprozesses keine wesentliche Rolle.

In einer bevorzugten Ausführungsform der vorliegenden Erfindung enthält die Epoxidharzmischung weiterhin mindestens 10 Gew.-% eines Epoxidgruppen-haltigen Reaktionsprodukts von Epichlorhydrin mit Bisphenol A, das ein Epoxid-Äquivalentgewicht von mindestens 500g/eq aufweist.

In dieser Ausführungsform sind dementsprechend Zusammensetzungen besonders bevorzugt, die bezogen auf die Masse aller Epoxidharze, die folgenden Komponenten enthalten:
- a) 10 - 60Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 15 - 85Gew.-% eines Epoxidgruppen-haltigen Reaktionsprodukts von Epichlorhydrin mit einem Novolakharz, das ein Epoxid-Äquivalentgewicht von mindestens 175g/eq aufweist, sowie
- c) 0 - 70Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist.

In dieser Ausführungsform sind dementsprechend Zusammensetzungen ganz besonders bevorzugt, die bezogen auf die Masse aller Epoxidharze, die folgenden Komponenten enthalten:
- a) 10 - 60Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 15 - 85Gew.-% eines Epoxidgruppen-haltigen Reaktionsprodukts von Epichlorhydrin mit einem Novolakharz, das ein Epoxid-Äquivalentgewicht von mindestens 175g/eq aufweist sowie eine Epoxyfunktionalität von mindestens 3 aufweist, sowie
- c) 0 - 70Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist.

Besonders bevorzugt sind erfindungsgemäß Zusammensetzungen, die bezogen auf die Masse aller Epoxidharze, die folgenden Komponenten enthalten:
- a) 30 - 45Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 30- 45Gew.-% eines Epoxidgruppen-haltigen Reaktionsprodukts von Epichlorhydrin mit einem Novolakharz, das ein Epoxid-Äquivalentgewicht von mindestens 175g/eq aufweist, sowie
- c) 10 - 40Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist.

Es hat sich erfindungsgemäß als besonders vorteilhaft erwiesen, wenn die erfindungsgemäße Zusammensetzung 0 bis 70 Gew.-% eines Epoxidgruppen-haltigen Reaktionsprodukts von Epichlorhydrin mit Bisphenol A, das ein Epoxid-Äquivalentgewicht von mindestens 500g/eq aufweist, enthält. Ganz bevorzugt ist ein Mengenbereich von 10 bis 40 Gew.-%. Die Mengenangaben beziehen sich dabei jeweils auf die Mischung aller Epoxidharze ohne die weiteren Formulierungsbestandteile.

Im Rahmen der dieser Erfindung zu Grunde liegenden Arbeiten konnte gezeigt werden, dass Epoxidgruppen-haltigen Reaktionsprodukte von Epichlorhydrin mit Bisphenol A, das ein Epoxid-Äquivalentgewicht von mindestens 560g/eq besonders vorteilhafte Eigenschaften aufweisen.

Erfindungsgemäß besonders bevorzugte Epoxidgruppen-haltigen Reaktionsprodukte von Epichlorhydrin mit Bisphenol A, das ein Epoxid-Äquivalentgewicht von mindestens 500g/eq sind unter den Handelsbezeichnungen
- Epikote^{®} 1002 (EEW 575-700g/eq; Epoxy-Funtionalität 2; Hexion)
- DER^{®} 662E (EEW 590-630g/eq; Epoxy-Funktionalität 2)
- Epon^{®} 1002F (EEW 600-700g/eq; Epoxy-Funktionalität 2)
- DER^{®} 662UH (EEW 675-750g/eq; Epoxy-Funktionalität 2)
- DER^{®} 663U (EEW 730-820g/eq; Epoxy-Funktionalität 2)
- DER^{®} 664U (EEW 875-955g/eq; Epoxy-Funktionalität 2)
- Epon^{®} 1009F (EEW 2300 - 3800g/eq; Epoxy-Funktionalität 2; Hexion)
- Epon^{®} 1007F (EEW 1700-2300g/eq; Epoxyfunktionalität 2; Hexion)
- Epon^{®} 1004F (EEW 800-950g/eq; Epoxy-Funktionalität 2; Hexion)
- DER^{®} 692H (EEW 660-720g/eq; Eopxy-Funktionalität 2; Dow)
- DER^{®} 692 (EEW 660-720g/eq; Epoxy-Funktionalität 2; Dow)
vertriebenen Epoxyharze. Die unter den Handelsbezeichnungen Epikote^{®} 1002, DER^{®} 662E und Epon^{®} 1002F vertriebenen Produkte sind erfindungsgemäß ganz besonders bevorzugt. Epon^{®} 1002F ist erfindungsgemäß ganz besonders bevorzugt.

Besonders vorteilhaft ist es erfindungsgemäß, wenn entsprechende Epoxidgruppen-haltige Reaktionsprodukte von Epichlorhydrin mit Bisphenol A, die ein Epoxid-Äquivalentgewicht unterhalb von 500g/eq aufweisen, maximal zu einem Anteil von 3 Gew.-%, insbesondere maximal zu einem Anteil von 1 Gew.-%, jeweils bezogen auf die gesamte Zusammensetzung, enthalten sind.

Insbesondere in toxikologischer Hinsicht hat es sich als vorteilhaft erwiesen, wenn die erfindungsgemäßen Zusammensetzungen neben den genannten erfindungswesentlichen Epoxidgruppen-haltigen Reaktionsprodukten a), b) und c) weniger als 3 Gew.-%, insbesondere weniger als 1 Gew.-% weiterer Epoxidgruppen-haltiger Reaktionsprodukte enthalten, jeweils bezogen auf die gesamte Zubereitung.

In einer besonders bevorzugten Ausführungsform dieses Gegenstandes besteht die Mischung der Epoxidharze aus
- a) 10 - 60Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 15 - 85Gew.-% eines Epoxidgruppen-haltigen Reaktionsprodukts von Epichlorhydrin mit einem Novolakharz, das ein Epoxid-Äquivalentgewicht von mindestens 175g/eq aufweist, sowie
- c) 0 - 70Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist,
wobei sich die Mengen der Bestandteile a), b) und c) zu 100Gew.-% ergänzen.

In einer ganz besonders bevorzugten Ausführungsform dieses Gegenstandes besteht die Mischung der Epoxidharze aus
- a) 10 - 60Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 15 - 85Gew.-% eines Epoxidgruppen-haltigen Reaktionsprodukts von Epichlorhydrin mit einem Novolakharz, das ein Epoxid-Äquivalentgewicht von mindestens 175g/eq aufweist sowie eine Epoxyfunktionalität von mindestens 3 aufweist, sowie
- c) 0 - 70Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist,
wobei sich die Mengen der Bestandteile a), b) und c) zu 100Gew.-% ergänzen.

In einer ganz besonders bevorzugten Ausführungsform dieses Gegenstandes besteht die Mischung der Epoxidharze aus
- a) 30 - 45Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 30- 45Gew.-% eines Epoxidgruppen-haltigen Reaktionsprodukts von Epichlorhydrin mit einem Novolakharz, das ein Epoxid-Äquivalentgewicht von mindestens 175g/eq aufweist, sowie
- c) 10 - 40Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist,
wobei sich die Mengen der Bestandteile a), b) und c) zu 100Gew.-% ergänzen.

Als weiteren erfindungswesentlichen Bestandteil enthalten die Zubereitungen mindestens einen latenten Härter.

Als "latent" wird ein Härter bezeichnet, der erst reagiert, wenn eine entsprechende Menge an Aktivierungsenergie zugegeben wird. Es hat sich als erfindungsgemäß als vorteilhaft erwiesen, wenn die Aktivierungsenergie in Form von Wärme zugegeben wird, das heißt, dass der latente Härter vorzugsweise erst ab einer Temperatur deutlich oberhalb der Raumtemperatur, beispielsweise ab 80 °C oder ab 100 °C aktiviert wird und erst dann mit den Epoxidgruppen reagiert. In einer bevorzugten Ausführungsform handelt es sich daher um einen einkomponentigen Klebstoff, der bei einer Temperatur im Bereich von 80 bis 230 °C, insbesondere von 100 bis 200 °C härtet. Diese Temperatur soll vorzugsweise für eine Zeitdauer im Bereich von 5 bis 150 Minuten aufrecht gehalten werden.

Derartige latente Härter für Epoxidharze sind dem Fachmann bekannt. Diese können beispielsweise ausgewählt werden aus den folgenden Verbindungen: Guanidine, substituierte Guanidine, substituierte Harnstoffe, Melaminharze, Guanamin-Derivate, cyclische tertiäre Amine, aromatische Amine und/oder deren Mischungen. Ein erfindungsgemäß besonders bevorzugter latenter Härter ist Dicyanamid.

Dabei können die Härter sowohl stöchiometrisch mit in die Härtungsreaktion einbezogen sein, sie können jedoch auch katalytisch wirksam sein.

Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt.

Weiterhin können als latente Härter katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Weiterhin eigenen sich Addukte von Aminoverbindungen an Epoxidharze als beschleunigende Zusätze zu den vorgenannten Härtern. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethylaminoethanol, N-substituierte Piperazine, N-substituierte Homopiperazine, N-substituierte Aminophenole an Di- oder Polyglycidylether des Bisphenols A oder F oder des Resorcins.

Besonders bevorzugt ist es, wenn als latenter Härter eine Kombination aus substituiertem Guanidin und katalytisch wirksamen substituiertem Harnstoff eingesetzt wird; besonders bevorzugt ist eine Kombination von Dicyandiamid mit substituiertem Harnstoff.

Eine bevorzugte Ausführungsform eines einkomponentigen Klebstoffs ist dadurch gekennzeichnet, dass er, bezogen auf die Masse des gesamten Klebstoffs, 50 - 99 Gew.-% einer härtbaren Mischung von Epoxidharzen wie oben beschrieben und 1 bis 20 Gew.-%, insbesondere 3 bis 12 Gew.-% eines oder mehrer latenter Härter für Epoxidharze enthält, wobei ein Rest zu 100 Gew.-% aus Härtungskatalysatoren (wie beispielsweise substituierter Harnstoff), Füllstoffen, Stabilisatoren, Farbpigmenten, Schlagzähigkeitsverbesserer und/oder weiteren Hilfs- oder Wirkstoffen bestehen kann.

Fügt man der vorstehend beschriebenen thermisch härtbaren Zusammensetzung zusätzlich ein Treibmittel (auch "Blähmittel" genannt, englisch: "foaming agent") zu, wird eine expandierbare und härtbare Zubereitung erhalten, die als Strukturschaum zur Verstärkung von Bauteilen, insbesondere von Hohlbauteilen dienen kann. Sie kann zur Verstärkung von Bauteilen im Fahrzeugbau, insbesondere beim Automobilbau Verwendung finden. Daher besteht eine weitere Ausführungsform der vorliegenden Erfindung darin, dass die Zubereitung zusätzlich ein physikalisches oder chemisches Treibmittel enthält.

Als Treibmittel eignen sich im Prinzip alle bekannten Treibmittel wie beispielsweise die "chemischen Treibmittel" die durch Zersetzung Gase freisetzen, oder "physikalische Treibmittel", das heißt expandierende Hohlkugeln.

Es hat sich erfindungsgemäß als vorteilhaft erwiesen, wenn die Zusammensetzungen 0,1 bis 12 Gew.-% eines Treibmittels enthalten.

Beispiele für die erstgenannten Treibmittel sind Azobisisobutyronitril, Azodicarbonamid, Di-Nitrosopentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid.

Besonders bevorzugt sind die expandierbaren Kunststoffmikrohohlkugeln auf der Basis von Polyvinylidenchloridcopolymeren oder Acrylnitril/(Meth)acrylat-Copolymeren. Diese sind z.B. unter den Namen "Dualite^{®}" bzw. "Expancel^{®}" von den Firmen Pierce & Stevens bzw. Casco Nobel im Handel erhältlich.

Die Menge an Treibmittel wählt man vorzugsweise so, dass sich das Volumen der Masse beim Erwärmen auf Aktivierungstemperatur (oder Expansionstemperatur) um mindestens 10 %, vorzugsweise mindestens 20 % und insbesondere mindestens 50 % irreversibel vergrößert. Hierunter ist zu verstehen, dass die Masse zusätzlich zur normalen, reversiblen thermischen Ausdehnung gemäß ihrem thermischen Ausdehnungskoeffizienten ihr Volumen im Vergleich zum Ausgangsvolumen bei Raumtemperatur (22 °C) beim Erwärmen auf die Aktivierungstemperatur irreversibel derart vergrößert, dass es nach dem Wiederabkühlen auf Raumtemperatur im genannten Ausmaß größer ist als zuvor. Der angegebene Expansionsgrad bezieht sich also auf das Volumen der Masse bei Raumtemperatur vor und nach dem vorübergehenden Erhitzen auf die Aktivierungstemperatur. Die Obergrenze des Expansionsgrads kann man durch die Wahl der Menge des Treibmittels so einstellen, dass sie bis zu 300 % beträgt und insbesondere unter 200 % liegt.

In dieser Ausführungsform enthält die thermisch schäumbare und härtbare Zusammensetzung vorzugsweise, bezogen auf die gesamte Zusammensetzung:
76 bis 98,9 Gew.-%, insbesondere 89 bis 96 Gew.-% der erfindungsgemäßen härtbaren Mischung von Epoxidharzen,
1 bis 12 Gew.-%, insbesondere 3 bis 7 Gew.-% latenten Härter und
0,1 bis 12 Gew.-%, insbesondere 1 bis 4 Gew. Treibmitttel,
wobei ein Rest zu 100 Gew.-% aus Härtungskatalysatoren, Füllstoffen, Stabilisatoren, Farbpigmenten, Schlagzähigkeits-Verbesserer und/oder weiteren Hilfs- oder Wirkstoffen bestehen kann.

Die Aktivierungstemperatur liegt vorzugsweise im Bereich von 100 bis 220 °C, insbesondere bei 120 bis 200 °C. Diese Temperatur soll vorzugsweise für eine Zeitdauer im Bereich von 5 bis 150 Minuten aufrecht gehalten werden.

Diese thermisch härtbare und schäumbare Zusammensetzung kann als Strukturschaum verwendet werden, worin eine weitere Ausführungsform der vorliegenden Erfindung besteht. Dieser kann zum Verstärken und/oder Abdichten von Hohlräumen, insbesondere von Hohlräumen in metallischen Strukturen verwendet werden. Für diesen Zweck kann er beispielsweise im Schiffsbau, Flugzeugbau und insbesondere im Fahrzeugbau Verwendung finden.

Zur Verbesserung des Bruchverhaltens, insbesondere bei Temperaturen unterhalb von 0 °C, können die erfindungsgemäßen Zubereitungen einen oder mehrere unterschiedliche so genannte Schlagzähigkeits-Verbesserer (englisch: "toughener") enthalten. Derartige Schlagzähigkeits-Verbesserer sind dem Fachmann auf dem Gebiet der Epoxid-Klebstoffe bekannt. Beispielsweise können sie ausgewählt sein aus: Thermoplastischen Isocyanaten oder Polyurethanen, Kautschuk-Partikeln, insbesondere solchen mit Kern-Schale-Struktur, und Block-Copolymeren, insbesondere solchen, die einen ersten Polymerblock mit einer Glasübergangstemperatur von unterhalb 15 °C und einen zweiten Polymerblock mit einer Glasübergangstemperatur von oberhalb 25 °C enthalten. Derartige Block-Copolymere sind vorzugsweise ausgewählt aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block. Spezielle Beispiele hierfür sind Block-Copolymere mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, Methylmethacrylat-Butylacrylat-Methylmethacrylat.

Weiterhin hat es sich als erfindungsgemäß vorteilhaft erwiesen, wenn die erfindungsgemäßen Zusammensetzungen neben der Mischung von Epoxidharzen und dem latenten Härter mindestens einen anorganischen und/oder organischen Füllstoff enthält.

Erfindungsgemäß bevorzugt Füllstoffe sind zum Beispiel die diversen gemahlenen oder gefällten Kreiden, Ruß, Calcium-Magnesiumcarbonate, Talkum, Schwerspat sowie insbesondere silicatische Füllstoffe vom Typ des Aluminium-Magnesium-Calcium-Silicats, z. B. Wollastonit, Chlorit.

Zur Gewichtsreduzierung kann die Zubereitung zusätzlich zu den vorgenannten "normalen" Füllstoffen so genannte Leichtfüllstoffe enthalten. Diese können ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in der ausgehärteten Zubereitung eine hohe Druckfestigkeit gewährleisten.

Weiterhin können die erfindungsgemäßen härtbaren Zubereitungen gängige weitere Hilfs- und Zusatzmittel wie beispielsweise Weichmacher, Rheologie-Hilfsmittel, Netzmittel, Haftvermittler, Alterungsschutzmittel, Stabilisatoren und/oder Farbpigmente enthalten.

Die erfindungsgemäßen einkomponentigen Klebstoffe können zum Fügen und Reparieren von Teilen im Schiffsbau, Flugzeugbau und im Fahrzeugbau Verwendung finden. Sie zeichnet sich durch gute Verarbeitbarkeit und hohe Festigkeit einerseits sowie durch besonders geringe Gesundheitsgefährdung andererseits aus. Weitere Anwendungsgebiete für die erfindungsgemäßen Systeme sind der Do-ityourself-Bereich sowie der Bereich Maintenance, Repair and Overhaul für Fahrzeuge, Maschinen und Flugzeugbau, aber auch Anwendungsbereiche in anderen Bereichen der generellen Industrie sind erfindungsgemäß mit umfasst.

Ein zweiter Gegenstand der vorliegenden Erfindung ist daher die Verwendung der hitzehärtbaren Zusammensetzungen als Strukturklebstoff im Fahrzeugbau, Flugzeugbau oder Schienenfahrzeugbau. Dabei zeichnen sie sich insbesondere dadurch aus, dass sie hochfest und schlagfest sind

Ein dritter Gegenstand der vorliegenden Erfindung ist die Verwendung der erfindungsgemäßen Zusammensetzungen, die zusätzlich ein Treibgas enthalten, als Strukturschaum zur Bildung von Innenversteifungen von Hohlräumen, vorzugsweise im Fahrzeugbau, sowie zur Herstellung von versteifenden Beschichtungen für dünnwandige Bleche oder Kunststoffbauteile

Ein weiterer Gegenstand der vorliegenden Erfindung ist die Verwendung der erfindungsgemäßen Zusammensetzungen zur Herstellung von Verbundwerkstoffen, als Vergussmassen in der Elektrobeziehungsweise Elektronikindustrie sowie als Die-Attach-Klebstoff bei der Herstellung von Leiterplatten in der Elektronikindustrie.

Ein weiterer Gegenstand der vorliegenden Erfindung ist ein Verfahren zum Verkleben von metallischen und/oder Verbundwerkstoffen, bei dem
(a) in einem ersten Schritt die Oberflächen der zu verklebenden Teile gegebenenfalls gereinigt und/oder vorbehandelt wird,
(b) in einem zweiten Schritt eine Zubereitung nach einem der Ansprüche 1 bis 11 auf mindestens eine der zu fügenden Substratoberflächen aufgetragen wird,
(c) anschließend die Bauteile gefügt werden,
(d) gegebenenfalls die Zusammensetzung bis zur Formstabilität vorgeliert wird, und
(e) abschließend die Verklebung durch Erwärmen der Bauteile auf Temperaturen zwischen 80°C und 210°C, vorzugsweise zwischen 120°C und 180°C ausgehärtet wird.

Ein Verfahren zum Verkleben von metallischen und/oder Verbundwerkstoffen, bei dem
(a) in einem ersten Schritt die Oberflächen der zu verklebenden Teile gegebenenfalls gereinigt und/oder vorbehandelt wird,
(b) in einem zweiten Schritt eine Zubereitung nach einem der Ansprüche 1 bis 11 auf mindestens eine der zu fügenden Substratoberflächen aufgetragen wird,
(c) anschließend die Bauteile gefügt werden und
(d) abschließend die Verklebung durch Erwärmen der Bauteile auf Temperaturen zwischen 80°C und 210°C, vorzugsweise zwischen 120°C und 180°C ausgehärtet wird, kann erfindungsgemäß besonders bevorzugt sein.

Unter einer "Vorgelierung bis zur Formstabilität" wird ein gezieltes Erhitzen der Zusammensetzung verstanden, das ausreicht, um die gegebenenfalls flüssige Zusammensetzung in einen Zustand zu überführen, in dem diese längere Zeit ohne Änderung der äußeren Geometrie gelagert werden kann, ohne jedoch ein vollständiges Härten der Epoxydharzmischung zu zulassen. Um diesen Zustand zu erreichen, wird das Erhitzen bezüglich der eingesetzten Temperaturen und Anwendungszeiten genau kontrolliert und begrenzt.

Die erfindungsgemäßen 1 K-Zusammensetzungen werden erfindungsgemäß vorzugsweise in Kartuschen, Fässern oder Großgebinden verkauft.

### Ausführungsbeispiele

### 1 Herstellung der Klebstoffe

### 1.1 Herstellung der Harzmischungen

Es wurden die folgenden Harzmischungen durch Mischung der Einzelkomponenten und starkem Rühren bei 70-100°C für 1 Stunde hergestellt.

### 1.1.1 Messung der Viskositäten

Die Viskositäten wurden auf einem Gerät ARES der Fa. TA Instruments, New Castle, DE 19720, USA bei einer Temperatur von 25°C gemessen und mittels der Software TA-Orchestrator ausgewertet. Bei einer Viskosität <0,25 Pa*s wurde mittels Kegel/Platte (0,04°/25mm) bei einer Scherrate 0-100 /s gemessen. Viskositäten >0,25 Pa*s und <10.000 Pa*s wurden mittels Platte/Platte (25mm/25mm) bei einer Scherrate 0-100 /s gemessen. Viskositäten >10.000 Pa*s wurden mittels Platte/Platte (25mm/25mm) und einer Winkelfrequenz von 100 rad/s gemessen.

### 1.1.2 Zusammensetzungen der Harzmischungen

| | Harzmischung A | Harzmischung B |
|---|---|---|
| DER^{®} 732 [g] | 33,3 | 40 |
| DEN^{®} 439 [g] | 66,7 | 40 |
| Epikote^{®} 1002 [g] | 0 | 20 |
| | | |

| **Kenngrößen** | | |
|---|---|---|
| Viskosität [Pa*s] | 60 | 80 |
| EEW* [g/eq] | 229 | 281 |

Der in der letzten Zeile angegebene EEW*-Wert wurde aus den gewichteten EEW-Werten der Einzelkomponenten berechnet.

### 1.2 Zusammensetzung der Klebstoffe

Es wurden die folgenden Klebstoffzusammensetzungen hergestellt:

| Pos. | Rohstoff | Rezeptur 1 | Rezeptur 2 | Rezeptur 3 | Rezeptur 4 |
|---|---|---|---|---|---|
| 1 | Resin A | 67,06g | -- | 67,12g | -- |
| 2 | Resin B | -- | 67,65g | -- | 67,59g |
| 3 | Mesamoll^{®} | -- | 1,61g | 1,59g | -- |
| 4 | Cardolite Lite^{®} 2513HP | 1,59g | -- | -- | 1,61g |
| 5 | Dyhard^{®} 100SH | 5,95g | 5,06g | 5,87g | 5,14g |
| 6 | Dyhard^{®} URAcc 13 | 0,30g | 0,30g | 0,30g | 0,31g |
| 7 | Aspolit^{®} F70 | 22,07g | 22,3g | 22,1g | 22,29g |
| 8 | Cabosil^{®} TS-720 | 3,03g | 3,08g | 3,02g | 3,06g |
| | Epoxy Äquivalent | 0,3 | 0,2 | 0,3 | 0,2 |
| | Amin Äquivalent | 0,3 | 0,2 | 0,3 | 0,2 |

In einem ersten Schritt wurden die Komponenten 1 bis 4 in einem Speedmixer eingefüllt und für 20 Sekunden bei 3500U/min vermischt. Anschließend wurden die Komponenten 5 und 6 zugefügt und

erneut ein Mischvorgang für 20 Sekunden bei 3500U/min durchgeführt. Abschließend wurden auch die Komponenten 7 und 8 zugefügt. Nach erneuter Mischung unter den beschriebenen Bedingungen wurde die resultierende Mischung im Vakuum entgast. Dabei kam es im Speedmixer zu einer bauartbedingten Erwärmung auf maximal 50°C.

### 1.3 Verzeichnis der eingesetzten Rohstoffe

- Aspolit^{®} F70: 2-komponentiger Füllstoff, bestehend aus Muskovit und Quartz (ca. 69Gew.-% SiO₂, 14 Gew.-%Al₂O₃, 5.5 Gew.-% K₂ O; 2Gew.-% CaO, 2Gew.-% Fe₂O₃)(Aspanger)
- Cabosil^{®} TS-720: Siliziumdioxid, Pyrogene amorphe Kieselsäure, Hersteller Cabot
- Cardolite Lite^{®} 2513HP: epoxidiertes Cashewnußschalenöl; ca. 99% Reinheit; EEW 400g/eq (Cardolite Europe)
- DEN^{®} 439: Reaktionsprodukt von Epichlorhydrin mit einem Phenol/Formaldehyd-Novolak; EEW 200g/eq; Epoxyfunktionalität ±3,8; Hersteller Dow
- DER^{®} 732: Reaktionsprodukt von Epichlorhydrin mit Polypropylenglykol; EEW 320g/eq; Hersteller Dow
- Dyhard^{®} 100SH: 1-Cyanguanidine; ca. 94,8% Reinheit (Evonik Degussa); AHEW 21 g/eq
- Dyhard^{®} URAcc 13: Beschleuniger-Zubereitung auf Basis eines substituierten Harnstoffs, enthält hochdisperses, amorphes Siluziumdioxid (AlzChem)
- Epikote^{®} 1002: Reaktionsprodukt von Epichlorhydrin mit Bisphenol A; EEW 638g/eq; Hersteller Hexion;
- Mesamoll^{®}: C₁₀₋₂₁ Alkylsulfonsäurephenylester (Lanxess)

### 2 Bestimmung der Zugscherfestigkeiten

Zur Bestimmung der Zugscherfestigkeiten wurden die Klebstoffe auf zwei sandgestrahlte, kaltgewälzte Stahlproben mit einer Überlappungsfläche von 2,5 cm² und einer Schichtdicke von 0,2mm aufgetragen, und die beiden Proben miteinander verklebt. Anschließend wurden die Proben für 30 Minuten bei 180°C ausgehärtet und danach 1 Tag bei Raumtemperatur gelagert.
Nach dieser Zeit wurden die Zugscherfestigkeit des Klebstoffs gemäß DIN EN 1465 mit einer Geschwindigkeit von 15mm/min getestet.

Dabei ergaben sich die folgenden Werte:

| | LSS [N/mm²] | Gefahrstoffkennzeichnung nach EG Richtlinie 67/548/EEC |
|---|---|---|
| Rezeptur 1 | 30 | Keine |
| Rezeptur 2 | 35 | Keine |
| Rezeptur 3 | 30 | Keine |
| Rezeptur 4 | 34 | Keine |

Die erfindungsgemäßen nicht kennzeichnungspflichtigen Klebstoffe weisen Zugscherfestigkeiten auf, die sogar oberhalb der Werte liegen, die mit üblichen Handelsprodukten auf diesem Gebiet erzielt werden können.

## Patentansprüche

1. Hitzehärtbare Zusammensetzung, enthaltend eine Mischung von reaktiven Epoxidharzen, die, bezogen auf die Masse aller Epoxidharze
a) mindestens 10 Gew.-% eines Epoxidgruppen-haltigen Reaktionsprodukts von Epichlorhydrin mit Polypropylenglykol, das ein Epoxid-Äquivalentgewicht von mindestens 250g/eq aufweist, sowie
b) mindestens 10 Gew.-% eines Epoxidgruppen-haltigen Reaktionsprodukts von Epichlorhydrin mit einem Novolakharz, das ein Epoxid-Äquivalentgewicht von mindestens 175g/eq aufweist, enthält,
und mindestens einen latenten Härter.

2. Zusammensetzung nach Anspruch 1, **dadurch gekennzeichnet, dass** die Komponente a) ein Epoxid-Äquivalentgewicht von mindestens 300g/eq aufweist,
und/oder
dass die Komponente b) ein Epoxid-Äquivalentgewicht von mindestens 190g/eq aufweist.

3. Zusammensetzung nach einem oder mehreren der Ansprüche 1 oder 2, **dadurch gekennzeichnet, dass** die Komponente b) ein Novolak-Harz mit einer Epoxid-Funktionalität von mindestens 3 enthält oder darstellt.

4. Zusammensetzung nach einem der Ansprüche 1 bis 3, **dadurch gekennzeichnet, dass** sie weiterhin mindestens einen anorganischen und/oder organischen Füllstoff enthält.

5. Zusammensetzung nach einem der Ansprüche 1 bis 4, **dadurch gekennzeichnet, dass** als latenter Härter Dicyandiamid eingesetzt wird, vorzugsweise in Kombination mit substituierten Harnstoffen

6. Zusammensetzung nach einem der Ansprüche 1 bis 5, **dadurch gekennzeichnet, dass** sie weiterhin 0,1 bis 12 Gew.-% eines Treibmittels enthält.

7. Verwendung der Zusammensetzungen nach einem der Ansprüche 1 bis 6 als Strukturklebstoff im Fahrzeugbau, Flugzeugbau oder Schienenfahrzeugbau.

8. Verwendung der Zusammensetzung nach Anspruch 6 als Strukturschaum zur Bildung von Innenversteifungen von Hohlräumen, vorzugsweise im Fahrzeugbau, sowie zur Herstellung von versteifenden Beschichtungen für dünnwandige Bleche oder Kunststoffbauteile

9. Verwendung der Zusammensetzungen nach den Ansprüchen 1 bis 6 zur Herstellung von Verbundwerkstoffen, als Vergussmassen in der Elektro-beziehungsweise Elektronikindustrie sowie als Die-Attach-Klebstoff bei der Herstellung von Leiterplatten in der Elektronikindustrie.

10. Verfahren zum Verkleben von metallischen und/oder Verbundwerkstoffen, **dadurch gekennzeichnet, dass**
(a) in einem ersten Schritt die Oberflächen der zu verklebenden Teile gegebenenfalls gereinigt und/oder vorbehandelt wird,
(b) in einem zweiten Schritt eine Zubereitung nach einem der Ansprüche 1 bis 6 auf mindestens eine der zu fügenden Substratoberflächen aufgetragen wird,
(c) anschließend die Bauteile gefügt werden,
(d) gegebenenfalls die Zusammensetzung bis zur Formstabilität vorgeliert wird, und
(e) abschließend die Verklebung durch Erwärmen der Bauteile auf Temperaturen zwischen 80°C und 210°C, vorzugsweise zwischen 120°C und 180°C ausgehärtet wird.

## Claims

1. Heat-curable composition containing a mixture of reactive epoxy resins which, based on the mass of all of the epoxy resins, comprises
(a) at least 10% by weight of an epoxy group-containing reaction product of epichlorohydrin with polypropylene glycol, having an epoxy equivalent weight of at least 250 g/eq, and
(b) at least 10% by weight of an epoxy group-containing reaction product of epichlorohydrin with a novolac resin, having an epoxy equivalent weight of at least 175 g/eq,
and at least one latent hardener.

2. Composition according to Claim 1, **characterized in that** component a) has an epoxy equivalent weight of at least 300 g/eq,
and/or
that component b) has an epoxy equivalent weight of at least 190 g/eq.

3. Composition according to one or more of Claims 1 or 2, **characterized in that** component b) contains or represents a novolac resin having an epoxy functionality of at least 3.

4. Composition according to one of Claims 1 to 3, **characterized in that** the composition further contains at least one inorganic and/or organic filler.

5. Composition according to one of Claims 1 to 4, **characterized in that** dicyandiamide is used as latent hardener, preferably in combination with substituted ureas.

6. Composition according to one of Claims 1 to 5, **characterized in that** the composition further contains 0.1 to 12% by weight of a foaming agent.

7. Use of the compositions according to one of Claims 1 to 6 as a structural adhesive in vehicle manufacturing, aircraft manufacturing, or railway vehicle manufacturing.

8. Use of the composition according to Claim 6 as structural foam for forming internal reinforcement of cavities, preferably in vehicle manufacturing, and for producing reinforcing coatings for thin-walled metal sheets or plastic components.

9. Use of the compositions according to Claims 1 to 6 for producing composite materials, as sealing compounds in the electrical and electronics industries, and as die attach adhesive in the manufacture of circuit boards in the electronics industry.

10. Method for adhesively bonding metallic and/or composite materials, **characterized in that**
(a) in a first step the surfaces of the components to be adhesively bonded are optionally cleaned and/or pretreated,
(b) in a second step a preparation according to one of Claims 1 to 6 is applied to at least one of the substrate surfaces to be joined,
(c) the components are subsequently joined together,
(d) the composition is optionally pregelled until dimensional stability is attained, and
(e) lastly, the adhesive bond is cured by heating the components to temperatures between 80°C and 210°C, preferably between 120°C and 180°C.

## Revendications

1. Composition thermodurcissable, comprenant un mélange de résines époxydiques réactives qui contient, sur la base de la masse de toutes les résines époxydiques,
a) au moins 10% en poids d'un produit, contenant des groupes époxydes, qui est le résultat de la réaction entre de l'épichlorhydrine et du polypropylène glycol et dont le poids équivalent en époxydes est d'au moins 250 g/eq, et
b) au moins 10% en poids d'un produit, contenant des groupes époxydes, qui est le résultat de la réaction entre de l'épichlorhydrine et une résine novolaque et dont le poids équivalent en époxydes est d'au moins 175 g/eq,
et au moins un agent de durcissement latent.

2. Composition selon la revendication 1, **caractérisée en ce que** le composant a) a un poids équivalent en époxydes d'au moins 300 g/éq.
et/ou
**en ce que** le composant b) a un poids équivalent en époxydes d'au moins 190 g/éq.

3. Composition selon l'une ou plusieurs des revendications 1 ou 2, **caractérisée en ce que** le composant b) contient ou représente une résine novolaque ayant une fonctionnalité époxyde d'au moins trois.

4. Composition selon l'une des revendications 1 à 3, **caractérisée en ce qu'**elle contient en outre au moins une charge inorganique et/ou organique.

5. Composition selon l'une des revendications 1 à 4, **caractérisée en ce que** l'on utilise comme agent de durcissement latent du dicyandiamide, de préférence en combinaison avec des carbamides substituées.

6. Composition selon l'une des revendications 1 à 5, **caractérisée en ce qu'**elle contient en outre 0,1 à 12% en poids d'un agent moussant.

7. Utilisation des compositions selon l'une des revendications 1 à 6 comme adhésif de structures dans la construction automobile, la construction aéronautique ou la construction de véhicules ferroviaires.

8. Utilisation de la composition selon la revendication 6 comme mousse de structures dans la formation d'éléments intérieurs de renforcement de cavités, de préférence dans la fabrication de véhicules, ainsi que dans la réalisation de revêtements de renforcement de tôles ou d'éléments structurels en matière plastique à parois minces.

9. Utilisation des compositions selon les revendications 1 à 6 dans la fabrication de matériaux composites, comme substances de scellement dans l'industrie électrique ou électronique et comme adhésif de fixation de puce dans la production de cartes de circuits imprimés dans l'industrie électronique.

10. Procédé de collage de matériaux composites et/ou de matières métalliques, **caractérisé en ce que**
(a) dans une première étape, l'on effectue éventuellement un nettoyage et/ou un prétraitement des surfaces des pièces à coller,
(b) dans une deuxième étape, l'on applique une préparation selon l'une des revendications 1 à 6 sur l'une au moins des surfaces de substrat à assembler,
(c) puis l'on assemble les composants,
(d) éventuellement, l'on pré-gélifie la composition pour stabiliser la forme, et
(e) enfin, l'on durcit le collage en chauffant les composants à des températures comprises entre 80°C et 210°C, de préférence entre 120°C et 180°C.
